# EUROPEAN PATENT SPECIFICATION

(11) **EP 4 529 489 B1**
(45) Date of publication and mention of the grant of the patent: **15.07.2026**
(21) Application number: 23776235.6
(22) Date of filing: 15.08.2023
(51) Int. Cl.: B01D 53/04, B01D 53/26, B60H 1/00, B60H 3/02, B60H 3/06

(54) **CABIN AIR CONTROL SYSTEM WITH SINGLE ADSORPTION UNIT**
KABINENLUFTREGELSYSTEM MIT EINER EINZIGEN ADSORPTIONSEINHEIT
SYSTÈME DE COMMANDE D'AIR D'HABITACLE COMPORTANT UNE UNITÉ D'ADSORPTION UNIQUE

(43) Date of publication of application: 02.04.2025
(73) Proprietor: MANN+HUMMEL GmbH, 71636 Ludwigsburg (DE)
(72) Inventor: CHAI, Jun, SHANGHAI, CN 201815 (CN); WU, Lei, SHANGHAI, CN 201815 (CN)
(74) Representative: Mann + Hummel Intellectual Property
(86) International application number: PCT/CN2023/113081
(87) International publication number: WO 2025/035382

(56) References cited:
- DE-A1- 19 512 844
- US-A1- 2019 160 418

## Description

### Technical Field

The present invention relates to a Heating, Venting, and Air Conditioning (HVAC) system for a vehicle, and more specifically to a cabin air control system for HVAC system.

### Background

In most motor vehicles, in order to achieve as many mileages as possible, it is very necessary to save as much energy as possible while the vehicle is driving. Usually, the driver and passengers can adjust the air temperature and humidity of the passenger compartment of the motor vehicle by means of HVAC system for comfort requirements.

The HVAC system can be operated in an external circulation mode or in an air recirculation (i.e., internal circulation) mode. Increasing operating time in recirculation mode by controlling an air conditioning device (regulation of recirculation/recirculation mode), wherein in recirculation operation the air in the passenger compartment is recirculated and is air-conditioned (heated or cooled ), will cause the air-conditioning device to draw in as little fresh air as possible from the external environment of the motor vehicle and to heat (in winter) or cool (in summer) the fresh air, and utilize cabin air recirculating by the recirculation mode to adjust the air temperature and humidity of the cabin to achieve desired energy savings.

However, during operation in the above-mentioned recirculation mode, the water vapor exhaled by the driver and passengers will cause fogging on glass (windshield or side windows) of the vehicle, which will bring unpredictable danger to the driver and passengers of the vehicle. If the defogging mode is continuously turned on, it will increase the power consumption and reduce the range of the vehicle, thereby failing to achieve the purpose of energy saving.

Moreover, in the air recirculation mode, the CO₂ exhaled by the driver and passengers may also accumulate in the passenger compartment. It will cause the driver to get sleepy during driving, which brings potential danger to the normal operation of the vehicle. For safety of the vehicle operation and the health of the driver and passengers, it is necessary to prevent and reduce the occurrence of this situation, so as to avoid that the driver's concentration may be greatly reduced due to the high concentration of carbon dioxide in the air in the passenger compartment, so as to avoid potential hazard to the normal operation of the vehicles.

At present, there is proposed a double adsorption unit structure including a first adsorption unit and a second adsorption unit. However, the double adsorption unit structure has a large volume, which increases the difficulty of vehicle layout; the weight thereof is heavier, and the double adsorption unit structure itself needs to add more components to strengthen the structure; in addition, the cost is high, and the double adsorption unit requires two heaters and two motors to be managed separately.

To this end, it is desirable to develop a single adsorption unit structure, which ensures performance, has relatively small size, has relatively light weight, uses a single heater and a single motor to achieve operation control, reduces the manufacturing cost, greatly improves the compatibility of the air control system of the vehicle, and at the same time meets the basic function of vehicle energy saving, thereby improving the market competitiveness of the system.

Examples of such single adsorption units are disclosed by DE19512844 and US2019160418.

### Summary

An object of the present invention is to provide an integrated cabin air control system, which is simple in structure, reduces the number of components and is easy to assembly.

Another object of the present invention is to provide an integrated cabin air control system, which enhances heat transfer efficiency and thus saves energy.

In one aspect, a cabin air control system is provided. The cabin air control system comprises:
an upper housing including:
   a first end;
   an opposite second end;
   an air inlet passage with an inlet opening at the first end of the upper housing; and
   a heater chamber in communication with the air inlet passage;
a lower housing including:
   a first end;
   an opposite second end; and
   an outlet passage with an outlet opening and an exhaust conduit at the first end of the lower housing, the outlet passage selectively communicating with the outlet opening and the exhaust conduit,
wherein the upper housing and the lower housing together define an adsorption unit chamber in communication with the outlet passage;
a single adsorption unit disposed in the adsorption unit chamber, the adsorption unit being configured to adsorb moisture and/or carbon dioxide and/or harmful gas; and
a heater disposed in the heater chamber, the heater being configured to heat air before being delivered to the adsorption unit, and the heated air being used to regenerate the adsorption unit,
wherein the adsorption unit extends along an adsorption unit longitudinal axis, and has a hollow encircling-shaped cross-section in a plane perpendicular to the adsorption unit longitudinal axis, with an opening at a top side thereof, and the heater abuts against the adsorption unit and at least partially covers the opening.

Preferably, the heater at least covers 80% of the opening.

Preferably, the cabin air control system further comprises a flap control assembly configured to switch between an adsorption mode and a regeneration mode, the flap control assembly including an outlet flap configured to be rotated between a first outlet position corresponding to the adsorption mode and a second outlet position corresponding to the regeneration mode,
wherein, in the first outlet position, the outlet opening is configured to be open and the exhaust conduit is configured to be closed by the outlet flap, so that adsorbed and/or purified air flows into a cabin via the outlet opening, and
in the second outlet position, the outlet opening is configured to be closed by the outlet flap and the exhaust conduit is configured to be open, so that exhaust including gas and water after regeneration flows to an environment through the exhaust conduit.

Preferably, the flap control assembly further includes an outlet flap coupling coupled with a drive mechanism.

Preferably, the outlet flap includes a blocking pad at an end remote to the drive mechanism,
in the first outlet position, the blocking pad is configured to block the exhaust conduit, and
in the second outlet position, the blocking pad is configured to not block the exhaust conduit.

Preferably, the adsorption unit includes water vapor adsorption material.

Preferably, the adsorption unit includes carbon dioxide adsorption material.

Preferably, the adsorption unit includes harmful gas adsorption material.

Preferably, the heater includes a mounting flange configured to engage with and seal against a mounting structure of the upper housing when the heater is installed in place in the upper housing.

Preferably, the adsorption unit is U-shaped or a semi-circle in the cross-section perpendicular to the adsorption unit longitudinal axis.

In the cabin air control system of the present invention, the adsorption unit has a hollow encircling-shaped cross-section in a plane perpendicular to the adsorption unit longitudinal axis and the heater abuts against the adsorption unit and at least partially covers the opening, heated air will immediately flow to the encircling-shaped adsorption unit in a diverging way. This can greatly shorten the heat transfer path and enhance the heat transfer efficiency and thus save energy for operating the cabin air control system.

In addition, air will flow through the heater before entering the adsorption unit. By configuring pore size of the heater, the flow resistance generated by the heater will slow the velocity of the air without substantially blocking the air, and thus lengthens residence time of the air in the adsorption unit. This will enhance the adsorption of moisture and/or carbon dioxide and/or harmful gas in the air.

By means of the structure design of the single adsorption unit, the cabin air control system of the present invention is simple in structure, reduces the number of components and the volume of the cabin air control system and is easy to assembly while ensuring performance of the cabin air control system, which greatly improves the vehicle compatibility of the cabin air control system.

In addition, by means of the structure design of the single adsorption unit, the weight of the cabin air control system of the present invention is relatively light, while ensuring performance of the cabin air control system, which reduces the production cost and facilitates the installation and maintenance of the cabin air control system on the whole vehicle.

Further areas of applicability of the present invention will become apparent from the detailed description, the claims and the drawings. The detailed description and specific examples are intended for purposes of illustration only and are not intended to limit the scope of the disclosure.

### Brief Description of the Drawings

The present invention will become more fully understood from the detailed description and the accompanying drawings.
Fig.1 is a schematic perspective view of a cabin air control system of the present invention.
Fig.2 is a schematic structural explosive view of the cabin air control system of the present invention.
Fig.3 is a schematic structural explosive view of a flap control assembly of the cabin air control system of the present invention.
Fig.4 is a top view of the cabin air control system of the present invention.
Fig.5 is a front view of the cabin air control system of the present invention.
Fig.6 is a side view of an upper housing and a lower housing of the cabin air control system of the present invention.
Fig.7 schematically illustrates in cross-sectional view an adsorption mode of the cabin air control system of the present invention.
Fig.8 schematically illustrates in cross-sectional view a regeneration mode of the cabin air control system of the present invention.
Fig.9 is a schematic perspective view of a heater of the cabin air control system of the present invention.
Fig.10 is a schematic perspective view of the flap control assembly of the cabin air control system of the present invention.
Fig.11 is a schematic partial perspective view of the cabin air control system of the present invention wherein the outlet flap is located at a first outlet position corresponding to the adsorption mode.
Fig.12 is a schematic partial perspective view of the cabin air control system of the present invention wherein the outlet flap is located at a second outlet position corresponding to the regeneration mode.
Fig.13 is a schematic perspective view of the heater and the adsorption unit of the cabin air control system of the present invention.
Fig.14 is a schematic longitudinal sectional view of the heater and the adsorption unit of the cabin air control system of the present invention.
Fig.15 is a schematic top view of the heater and the adsorption unit of the cabin air control system of the present invention.
Fig.16 is a schematic front view of the heater and the adsorption unit of the cabin air control system of the present invention.
Fig.17 is a schematic end view of the heater and the adsorption unit of the cabin air control system of the present invention.

### Detailed Description of Embodiments

As used herein, words such as "up", "down", "left", and "right" used herein to define orientations generally refer to and are understood as orientations in association with the drawings and orientations in actual application.

As used herein, the term "vehicle" may be used interchangeably and synonymously to include any relevant vehicle platform, such as passenger vehicles (ICE, HEV, FEV, fuel cell, fully and partially autonomous, etc.), commercial vehicles, industrial vehicles, tracked vehicles, off-road and all-terrain vehicles (ATV), motorcycles, farm equipment, watercraft, aircraft, etc. In an example, an electric vehicle includes a vehicle body with a passenger cabin, multiple road wheels mounted to the vehicle body, and other standard original equipment. An electrified powertrain contains one or more vehicle-mounted traction motors that operate alone (e.g., for FEV powertrains) or in conjunction with an internal combustion engine assembly (e.g., for HEV powertrains) to selectively drive one or more of the road wheels and thereby propel the vehicle.

As used herein, the term "encircling-shaped cross-section" may be used to describe a cross-section that extends around an axis and partially or entirely encircles the axis.

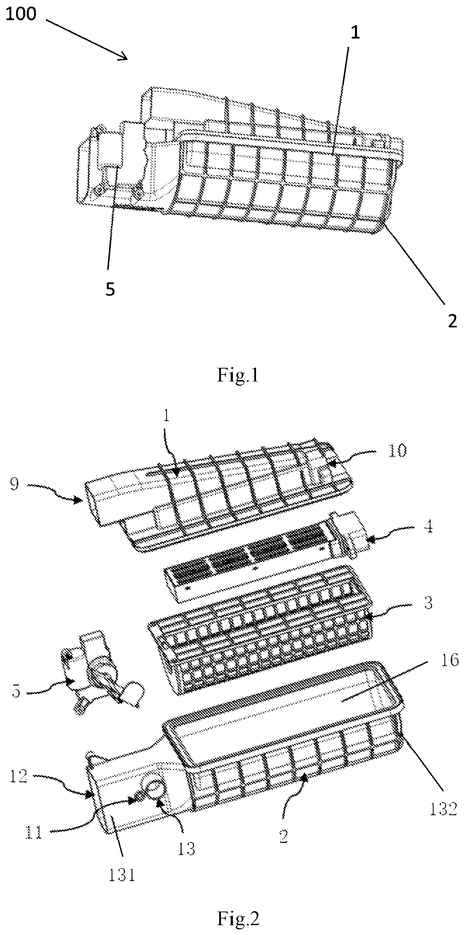

Referring now to the drawings, wherein like reference numbers refer to like features throughout the several views, Fig.1 is a schematic view of a cabin air control system 100 of the present invention; Fig.2 is a schematic structural explosive view of the cabin air control system 100 of the present invention.

The cabin air control system 100 may comprise an upper housing 1; a lower housing 2; a single adsorption unit 3; a heater 4; and a flap control assembly 5 configured to switch between an adsorption mode and a regeneration mode. The cabin air control system 100 may comprise other components as needed, such as a controller, at least one sensor, etc, without departing the scope of the claims.

By means of the structure design of the single adsorption unit 3, the cabin air control system 100 of the present invention is simple in structure, reduces the number of components and the volume of the cabin air control system 100 and is easy to assembly while ensuring performance of the cabin air control system 100, which greatly improves the vehicle compatibility of the cabin air control system 100. In addition, by means of the structure design of the single adsorption unit 3, the weight of the cabin air control system 100 of the present invention is relatively light, while ensuring performance of the cabin air control system 100, which reduces the production cost and facilitates the installation and maintenance of the cabin air control system 100 on the whole vehicle. The cabin air control system 100 of the present invention adopts a single heater to realize operational control, which reduces the cost of the cabin air control system 100 and enhances the market competitiveness of the cabin air control system 100.

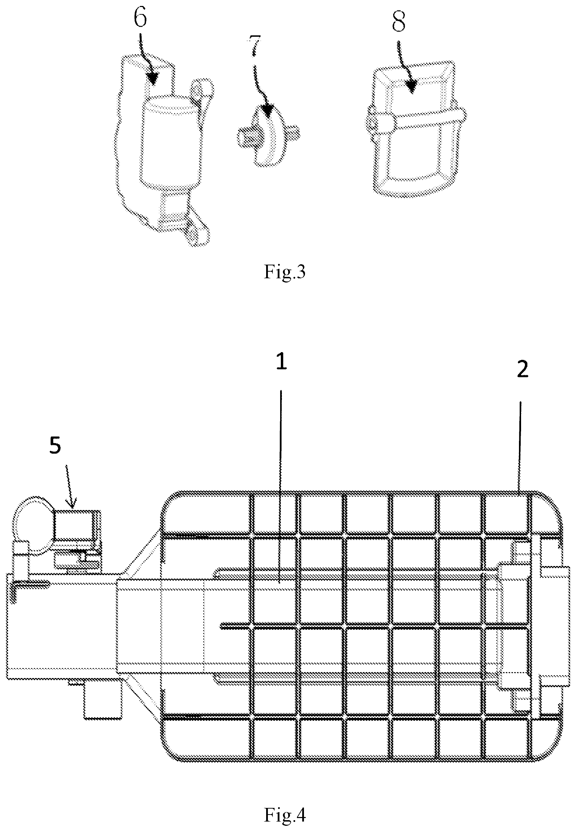

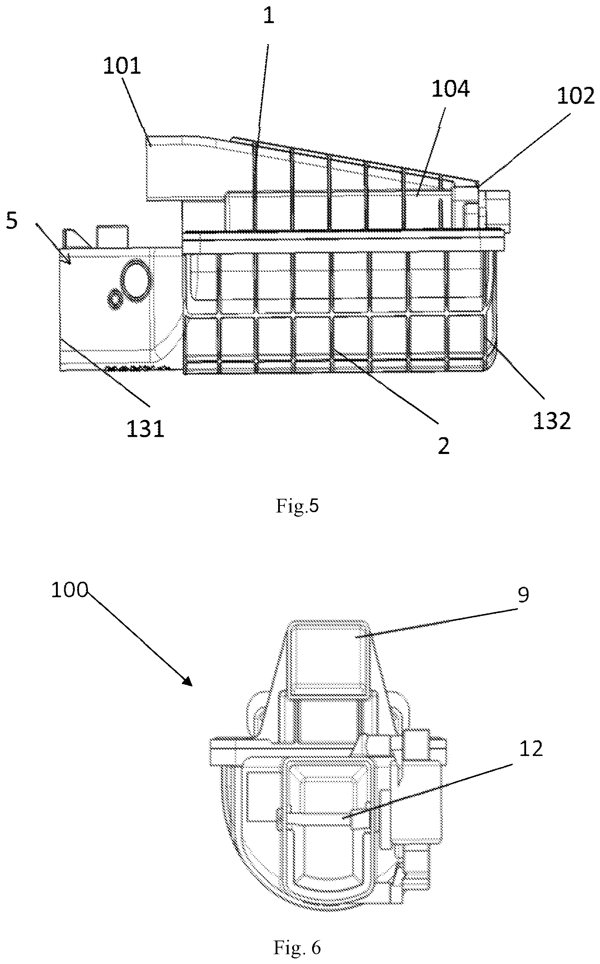

Fig.4 is a top view of the cabin air control system 100 of the present invention. Fig.5 is a front view of the cabin air control system 100 of the present invention. Fig.6 is a side view of an upper housing 1 and a lower housing 2 of the cabin air control system 100 of the present invention.

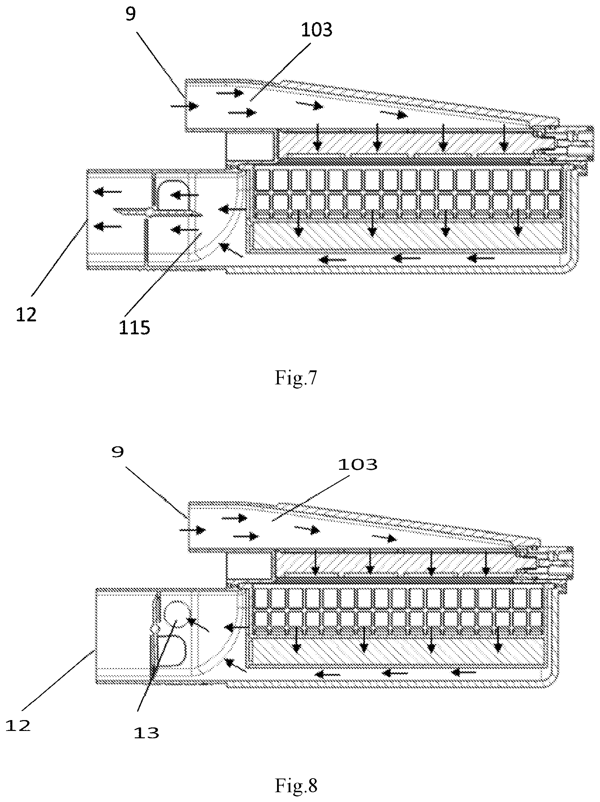

As a non-limiting example, the upper housing 1 may include a first end 101 and an opposite second end 102; an air inlet passage 103 (as shown in Fig.7 and Fig.8) with an inlet opening 9 at the first end 101 of the upper housing 1; and a heater chamber 104 in communication with the air inlet passage 103.

As a non-limiting example, the upper housing 1 may further include a mounting structure 10 for the heater 4, to mount and fix the heater 4. The upper housing 1 may comprise other components as needed, without departing the scope of the claims.

As a non-limiting example, the lower housing 2 may include a first end 131 and an opposite second end 132; and an outlet passage 115 (as shown in Fig.7) at the first end 131 of the lower housing 2, an outlet opening 12 and an exhaust conduit 13. The outlet passage 115 selectively communicates with the outlet opening 12 and the exhaust conduit 13, which depends on operating modes of the cabin air control system 100. As a non-limiting example, the upper housing 1 and the lower housing 2 together define an adsorption unit chamber 16 in communication with the outlet passage 115.

In addition, the lower housing 2 may further include a motor positioning and mounting structure (not shown), to locate and install a drive mechanism 6. The lower housing 2 may further include an outlet flap installation structure (not shown), to install the outlet flap 8 to ensure the normal control and sealing function of the outlet flap 8.

The lower housing 2 and the upper housing 1 may further include an installation and sealing structure (not shown) for the adsorption unit 3, to install and fix the adsorption unit 3 and cooperate with the sealing strip (not shown) on the adsorption unit 3 to realize the sealing of the cabin air control system against the environment. At the same time, the installation and sealing structure plays the role of separating a humid side from a dry side.

The adsorption unit 3 is disposed in the adsorption unit chamber 16, and configured to adsorb moisture and/or carbon dioxide and/or harmful gas. The adsorption unit 3 may be filled with water vapor adsorption material, carbon dioxide adsorption material, volatile adsorption material or adsorption material for absorbing other harmful substances according to customer needs. As a non-limiting example, the adsorption material may include resin, which has a certain adsorption capacity at room temperature, and has desorption ability at a temperature of 80-120 °C. By using the properties of low-temperature adsorption and high-temperature desorption of resin, the air quality in the cabin is well controlled. However, as will be understood by those skilled in the art, the adsorption material may be made from any suitable material, without departing the scope of the claims.

The heater 4 is disposed in the regeneration air chamber 15 and is configured to heat air before being delivered to the adsorption unit 3, heated air is used to regenerate the adsorption unit 3.

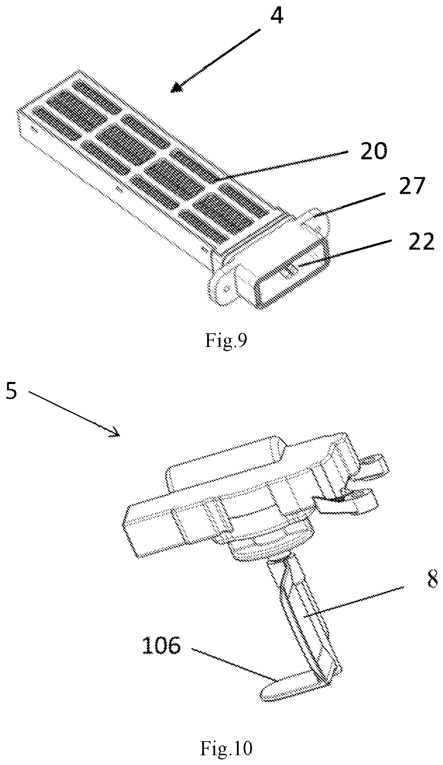

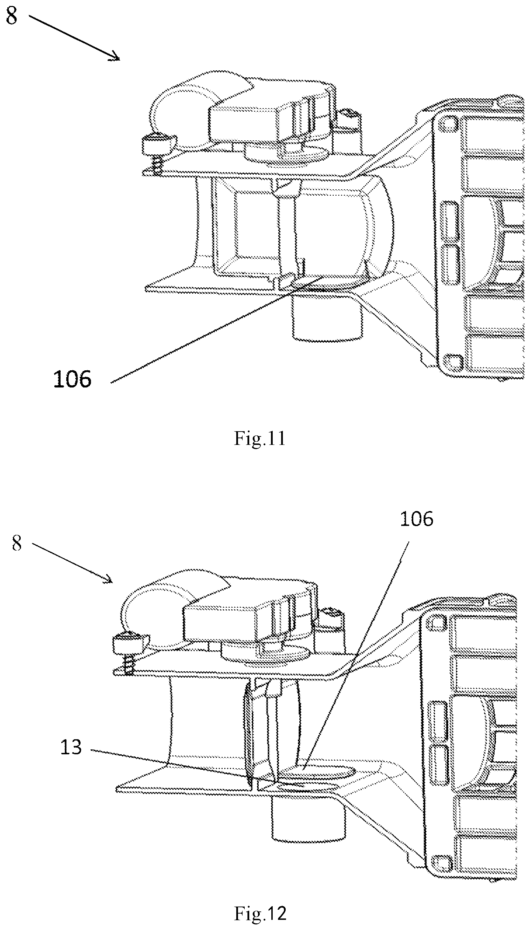

Fig.3 is a schematic structural explosive view of a flap control assembly 5 of the cabin air control system 100 of the present invention. Fig.10 is a schematic perspective view of a flap control assembly 5 of the cabin air control system 100 of the present invention. Fig.11 is a schematic partial perspective view of the cabin air control system 100 of the present invention wherein the outlet flap 8 is located at a first outlet position corresponding to the adsorption mode. Fig.12 is a schematic partial perspective view of the cabin air control system 100 of the present invention wherein the outlet flap 8 is located at a second outlet position corresponding to the regeneration mode.

The flap control assembly 5 comprises a drive mechanism 6, an outlet flap coupling 7 coupled with the drive mechanism 6, and an outlet flap 8 configured to be rotated between a first outlet position corresponding to the adsorption mode and a second outlet position corresponding to the regeneration mode. In the first outlet position for example as shown in Fig.11, the outlet opening 12 is open and the exhaust conduit 13 is closed by the outlet flap 8, so that adsorbed and/or purified air flows into a cabin via the outlet opening 12; in the second outlet position for example as shown in Fig.12, the outlet opening 12 is closed by the outlet flap 8 and the exhaust conduit 13 is open, so that the exhaust including gas and water after regeneration flows to the environment through the exhaust conduit 13.

As a non-limiting example, the drive mechanism 6 is an electric motor, with control logic and sensor signals for fully automatic control. However, the drive mechanism 6 may also include any other suitable drive mechanism, such as a hydraulic motor, without departing the scope of the claims.

As will be understood by those skilled in the art, the flap control assembly 5 may also utilize other suitable configurations, without departing the scope of the claims.

Fig.7 schematically illustrates in cross-sectional view an adsorption mode of the cabin air control system 100 of the present invention. Fig.8 schematically illustrates in cross-sectional view a regeneration mode of the cabin air control system 100 of the present invention. The outlet flap 8 is provided with a blocking pad 106 at an end remote to the drive mechanism 6. In the first outlet position, the blocking pad 106 blocks the exhaust conduit 13; and in the second outlet position, the blocking pad 106 does not block the exhaust conduit 13.

When the cabin air control system is in the adsorption mode (Fig.7), air with high humidity and/or high concentration of CO₂ to the air inlet passage 103 by means of an air conditioning fan (not shown), and then the air is transported to the adsorption unit 3 via the adsorption chamber 16 Air dehumidification and/or purification is carried out, and then the air flows through the outlet opening 12 and returns to the air conditioning system and is distributed to various areas of the cabin as desired.

When the cabin air control system is in regenerative mode (Fig.8), the air is transported to the air inlet passage 103 through the air conditioning fan, and then the air is transported to the heater 4 via the regeneration air chamber 15. The heater 4 is in working condition, the air is heated to the set temperature, and then the heated air is delivered to the adsorption unit 3. The adsorption material in the adsorption unit 3 is regenerated. The exhaust including gas such as CO₂ and water after regeneration flows to the environment through the exhaust conduit 13.

In addition, the cabin air control system 100 further comprises a controller, a first gas sensor (not shown) disposed near the outlet opening 12, and a second gas sensor (not shown) disposed near the exhaust conduit 13, the first gas sensor is configured to monitor vehicle the humidity level and/or the carbon dioxide level and/or harmful gas level of the outlet opening 12, the second gas sensor is configured to monitor the humidity level and/or the carbon dioxide level and/or harmful gas level of the exhaust conduit 13.

The cabin air control system 100 is configured to operate in the regeneration mode or the adsorption mode based on output signals of the first gas sensor and the second gas sensor.

Fig.9 is a schematic perspective view of a heater 4 of the cabin air control system 100 of the present invention. The heater 4 includes at least one temperature sensor (not shown), which can effectively monitor the temperature change of the heater 4 and prevent accidents caused by heater overheating and failure caused by heater failure as well as control regeneration temperature. As a non-limiting example, the heater 4 includes two temperature sensors. However, as will be understood by those skilled in the art, the heater 4 may include any suitable number of temperature sensors, without departing the scope of the claims.

The heater 4 further includes heating wires 20. By configuring pore size of the heater 4, the flow resistance generated by the heater 4 will slow the velocity of the air without substantially blocking the air, and thus lengthens residence time of the air in the adsorption unit 3. This will enhance the adsorption of moisture and/or carbon dioxide and/or harmful gas in the air.

The heater 4 further includes a mounting flange 27 which engages with and seals against a mounting structure 10 of the upper housing 1 when the heater 4 is installed in place in the upper housing 1. The heater 4 further includes a power plug interface 22, for connecting the heater 4 to the power supply. As will be understood by those skilled in the art, the heater 4 may comprise other components as needed, without departing the scope of the claims.

The cabin air control system 100 uses a single adsorption unit 3, a single motor and a single heater 4, which together reduce the complexity control logic, and reduce the control cost of the cabin air control system 100.

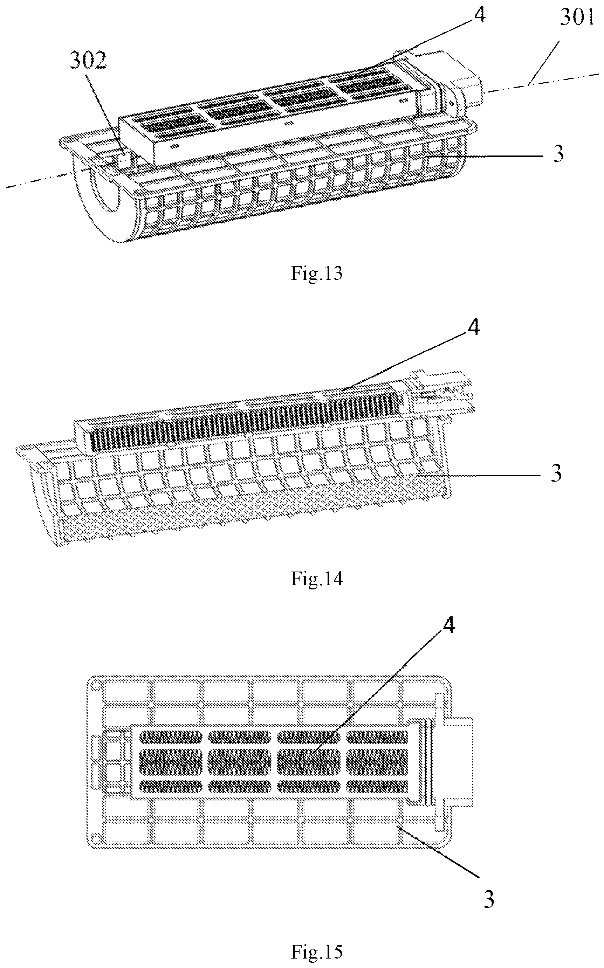

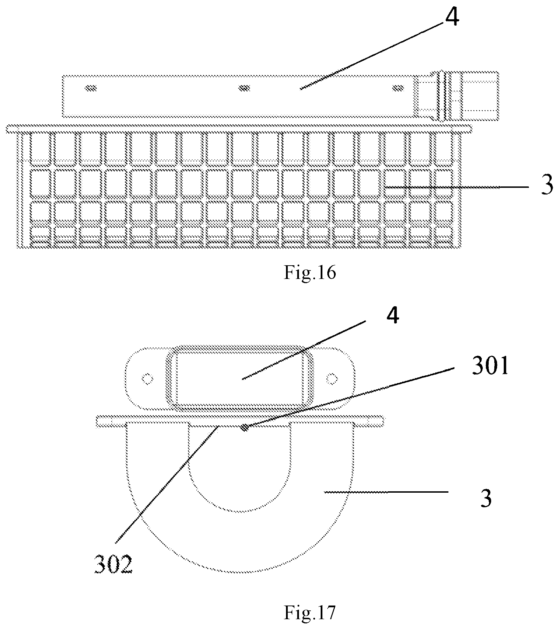

Fig.13 is a schematic perspective view of the heater 4 and the adsorption unit 3 of the cabin air control system 100 of the present invention. Fig.14 is a schematic longitudinal sectional view of the heater 4 and the adsorption unit 3 of the cabin air control system 100 of the present invention. Fig.15 is a schematic top view of the heater 4 and the adsorption unit 3 of the cabin air control system 100 of the present invention. Fig.16 is a schematic front view of the heater 4 and the adsorption unit 3 of the cabin air control system 100 of the present invention. Fig.17 is a schematic end view of the heater 4 and the adsorption unit 3 of the cabin air control system 100 of the present invention. As shown, the adsorption unit 3 extends along an adsorption unit longitudinal axis 301, and has a hollow encircling-shaped cross-section in a plane perpendicular to the adsorption unit longitudinal axis 301, with an opening 302 at a top side thereof; and the heater 4 abuts against the adsorption unit 3 and at least partially covers the opening 302. As a non-limiting example, the heater 4 at least covers 80% of the opening 302. As will be understood by those skilled in the art, the heater 4 may cover any other suitable percentage of the opening 302, for example, 85%, 90%, etc., without departing the scope of the claims. In addition, the adsorption unit 3 may be U-shaped or a semi-circle in the cross-section perpendicular to the adsorption unit longitudinal axis 301. As will be understood by those skilled in the art, the adsorption unit 3 may utilize any other suitable hollow encircling-shaped cross-section, without departing the scope of the claims.

In the cabin air control system 100 of the present invention, the adsorption unit 3 has a hollow encircling-shaped cross-section in a plane perpendicular to the adsorption unit longitudinal axis 301 and the heater 4 abuts against the adsorption unit 3 and at least partially covers the opening 302, heated air will immediately flow to the encircling-shaped adsorption unit in a diverging way. This can greatly shorten the heat transfer path and enhance the heat transfer efficiency and thus save energy for operating the cabin air control system 100.

Aspects of the present invention have been described in detail with reference to the illustrated embodiments; those skilled in the art will recognize, however, that many modifications may be made thereto without departing from the scope of the claims.

## Claims

1. A cabin air control system (100) comprising:
an upper housing (1) including:
a first end (101);
an opposite second end (102);
an air inlet passage (103) with an inlet opening (9) at the first end (101) of the upper housing (1); and
a heater chamber (104) in communication with the air inlet passage (103);
a lower housing (2) including:
a first end (131);
an opposite second end (132); and
an outlet passage (115) with an outlet opening (12) and an exhaust conduit (13) at the first end (131) of the lower housing (2), the outlet passage (115) selectively communicating with the outlet opening (12) and the exhaust conduit (13),
wherein the upper housing (1) and the lower housing (2) together define an adsorption unit chamber (16) in communication with the outlet passage (115);
a single adsorption unit (3) disposed in the adsorption unit chamber (16), the adsorption unit (3) being configured to adsorb moisture and/or carbon dioxide and/or harmful gas; and
a heater (4) disposed in the heater chamber (104), the heater (4) being configured to heat air before being delivered to the adsorption unit (3), and the heated air being used to regenerate the adsorption unit (3),
wherein the adsorption unit (3) extends along an adsorption unit longitudinal axis (301), and has a hollow encircling-shaped cross-section in a plane perpendicular to the adsorption unit longitudinal axis (301), with an opening (302) at a top side thereof, and
the heater (4) abuts against the adsorption unit (3) and at least partially covers the opening (302).

2. The cabin air control system (100) according to claim 1, wherein the heater (4) at least covers 80% of the opening (302).

3. The cabin air control system (100) according to claim 1, further comprising a flap control assembly (5) configured to switch between an adsorption mode and a regeneration mode, the flap control assembly (5) including an outlet flap (8) configured to be rotated between a first outlet position corresponding to the adsorption mode and a second outlet position corresponding to the regeneration mode,
wherein, in the first outlet position, the outlet opening (12) is configured to be open and the exhaust conduit (13) is configured to be closed by the outlet flap (8), so that adsorbed and/or purified air flows into a cabin via the outlet opening (12), and
in the second outlet position, the outlet opening (12) is configured to be closed by the outlet flap (8) and the exhaust conduit (13) is configured to be open, so that exhaust including gas and water after regeneration flows to an environment through the exhaust conduit (13).

4. The cabin air control system (100) according to claim 3, wherein the flap control assembly (5) further includes an outlet flap coupling (7) coupled with a drive mechanism.

5. The cabin air control system (100) according to claim 4, wherein the outlet flap (8) includes a blocking pad (106) at an end remote to the drive mechanism,
in the first outlet position, the blocking pad (106) is configured to block the exhaust conduit (13), and
in the second outlet position, the blocking pad (106) is configured to not block the exhaust conduit (13).

6. The cabin air control system (100) according to any one of claims 1 to 5, wherein the adsorption unit (3) includes water vapor adsorption material.

7. The cabin air control system (100) according to any one of claims 1 to 5, wherein the adsorption unit (3) includes carbon dioxide adsorption material.

8. The cabin air control system (100) according to any one of claims 1 to 5, wherein the adsorption unit (3) includes harmful gas adsorption material.

9. The cabin air control system (100) according to any one of claims 1 to 5, wherein the heater (4) includes a mounting flange (27) configured to engage with and seal against a mounting structure (10) of the upper housing (1) when the heater (4) is installed in place in the upper housing (1).

10. The cabin air control system (100) according to any one of claims 1 to 5, wherein the adsorption unit (3) is U-shaped or a semi-circle in the cross-section perpendicular to the adsorption unit longitudinal axis (301).

## Patentansprüche

1. Kabinenluftregelsystem (100), umfassend:
ein oberes Gehäuse (1) beinhaltend:
ein erstes Ende (101);
ein gegenüberliegendes zweites Ende (102);
einen Lufteinlasskanal (103) mit einer Einlassöffnung (9) am ersten Ende (101) des oberen Gehäuses (1); und
eine mit dem Lufteinlasskanal (103) kommunizierende Heizungskammer (104);
ein unteres Gehäuse (2) beinhaltend:
ein erstes Ende (131);
ein gegenüberliegendes zweites Ende (132); und
einen Auslasskanal (115) mit einer Auslassöffnung (12) und einer Abluftleitung (13) am ersten Ende (131) des unteren Gehäuses (2), wobei der Auslasskanal (115) selektiv mit der Auslassöffnung (12) und der Abluftleitung (13) kommuniziert,
wobei das obere Gehäuse (1) und das untere Gehäuse (2) zusammen eine mit dem Auslasskanal (115) kommunizierende Adsorptionseinheitskammer (16) bilden;
eine einzige Adsorptionseinheit (3), die in der Adsorptionseinheitskammer (15) angeordnet ist, wobei die Adsorptionseinheit (3) so konfiguriert ist, dass sie Feuchtigkeit und/oder Kohlendioxid und/oder Schadgas adsorbiert; und
eine Heizvorrichtung (4), die in der Heizungskammer (104) angeordnet ist, wobei die Heizvorrichtung (4) so konfiguriert ist, dass sie die Luft erwärmt, bevor diese der Adsorptionseinheit (3) zugeführt wird, und wobei die erwärmte Luft zur Regeneration der Adsorptionseinheit (3) verwendet wird,
wobei sich die Adsorptionseinheit (3) entlang einer Längsachse (301) der Adsorptionseinheit erstreckt und in einer Ebene senkrecht zur Längsachse (301) der Adsorptionseinheit einen hohlen, ringförmigen Querschnitt hat, mit einer Öffnung (302) an ihrer Oberseite, und
die Heizvorrichtung (4) an der Adsorptionseinheit (3) anliegt und die Öffnung (302) mindestens teilweise bedeckt.

2. Kabinenluftregelsystem (100) nach Anspruch 1, wobei die Heizvorrichtung (4) mindestens 80% der Öffnung (302) bedeckt.

3. Kabinenluftregelsystem (100) nach Anspruch 1, ferner umfassend eine Klappensteuerungsanordnung (5), die so konfiguriert ist, dass sie zwischen einem Adsorptionsmodus und einem Regenerationsmodus umschaltet, wobei die Klappensteuerungsanordnung (5) eine Auslassklappe (8) beinhaltet, die so konfiguriert ist, dass sie zwischen einer ersten Auslassposition, die dem Adsorptionsmodus entspricht, und einer zweiten Auslassposition, die dem Regenerationsmodus entspricht, umschaltet,
wobei in der ersten Auslassposition die Auslassöffnung (12) so konfiguriert ist, dass sie offen ist und die Abluftleitung (13) so konfiguriert ist, dass sie durch die Auslassklappe (8) verschlossen ist, so dass adsorbierte und/oder gereinigte Luft über die Auslassöffnung (12) in einen Innenraum strömt, und
in der zweiten Auslassposition die Auslassöffnung (12) so konfiguriert ist, dass sie durch die Auslassklappe (8) verschlossen ist und die Abluftleitung (13) so konfiguriert ist, dass sie offen ist, so dass Abluft, die Gas und Wasser nach der Regeneration beinhaltet, durch die Abluftleitung (13) in eine Umgebung strömt.

4. Kabinenluftregelsystem (100) nach Anspruch 3, wobei die Klappensteuerungsanordnung (5) ferner eine Auslassklappenkupplung (7) beinhaltet, die mit einem Antriebsmechanismus gekoppelt ist.

5. Kabinenluftregelsystem (100) nach Anspruch 4, wobei die Auslassklappe (8) an einem vom Antriebsmechanismus entfernten Ende ein Sperrpolster (106) beinhaltet,
in der ersten Auslassposition ist das Sperrpolster (106) so konfiguriert, dass es die Abluftleitung (13) blockiert, und
in der zweiten Auslassposition ist das Sperrpolster (106) so konfiguriert, dass es die Abluftleitung (13) nicht blockiert.

6. Kabinenluftregelsystem (100) nach einem der Ansprüche 1 bis 5, wobei die Adsorptionseinheit (3) Wasserdampfadsorptionsmaterial beinhaltet.

7. Kabinenluftregelsystem (100) nach einem der Ansprüche 1 bis 5, wobei die Adsorptionseinheit (3) Kohlenstoffdioxidadsorptionsmaterial beinhaltet.

8. Kabinenluftregelsystem (100) nach einem der Ansprüche 1 bis 5, wobei die Adsorptionseinheit (3) Schadgasadsorptionsmaterial beinhaltet.

9. Kabinenluftregelsystem (100) nach einem der Ansprüche 1 bis 5, wobei die Heizvorrichtung (4) einen Befestigungsflansch (27) beinhaltet, der so konfiguriert ist, dass er in eine Befestigungsstruktur (10) des oberen Gehäuses (1) eingreift und gegen diese abdichtet, wenn die Heizung (4) im oberen Gehäuse (1) eingebaut ist.

10. Kabinenluftregelsystem (100) nach einem der Ansprüche 1 bis 5, wobei die Adsorptionseinheit (3) im Querschnitt senkrecht zur Längsachse (301) der Adsorptionseinheit U-förmig oder halbkreisförmig ist.

## Revendications

1. Système de commande d'air d'habitacle (100) comprenant:
un boîtier supérieur (1) comprenant:
une première extrémité (101);
une deuxième extrémité opposée (102);
un passage d'entrée d'air (103) ayant une ouverture d'admission (9) au niveau de la première extrémité (101) du boîtier supérieur (1); et
une chambre de chauffage (104) communicant avec le passage d'entrée d'air (103);
un boîtier inférieur (2) comprenant:
une première extrémité (131);
une deuxième extrémité opposée (132);
un passage de sortie (115) avec une ouverture de sortie (12) et un conduit d'échappement (13) au niveau de la première extrémité (131) du boîtier inférieur (2), le passage de sortie (115) communiquant de manière sélective avec l'ouverture de sortie (12) et le conduit d'échappement (13);
dans lequel le boîtier supérieur (1) et le boîtier inférieur (2) définissent ensemble une chambre d'unité d'adsorption (16) communiquant avec le passage de sortie (115);
une seule unité d'adsorption (3) disposée dans la chambre d'unité d'adsorption (16), l'unité d'adsorption (3) étant configurée pour adsorber l'humidité et/ou le dioxyde de carbone et/ou des gaz toxiques; et
un dispositif de chauffage (4) disposé dans la chambre de chauffage (104), le dispositif de chauffage (4) étant configuré pour chauffer l'air avant qu'il ne soit acheminé vers l'unité d'adsorption (3), et l'air chauffé étant utilisé pour régénérer l'unité d'adsorption (3),
dans lequel l'unité d'adsorption (3) s'étend le long d'un axe longitudinal (301) de l'unité d'adsorption et a une section transversale en forme d'anneau creux dans un plan perpendiculaire à l'axe longitudinal (301) de l'unité d'adsorption, avec une ouverture (302) sur sa face supérieure, et
le dispositif de chauffage (4) est en butée contre l'unité d'adsorption (3) et couvre au moins partiellement l'ouverture (302).

2. Système de commande d'air d'habitacle (100) selon la revendication 1, dans lequel le dispositif de chauffage (4) couvre au moins 80% de l'ouverture (302).

3. Système de commande d'air d'habitacle (100) selon la revendication 1, comprenant en outre un ensemble de commande de clapet (5) configuré pour commuter entre un mode d'adsorption et un mode de régénération, l'ensemble de commande de clapet (5) comprenant un clapet de sortie (8) configuré pour être commuté entre une première position de sortie correspondant au mode d'adsorption et une deuxième position de sortie correspondant au mode de régénération,
dans lequel, dans la première position de sortie, l'ouverture de sortie (12) est configurée pour être ouverte et le conduit d'échappement (13) est configuré pour être fermé par le clapet de sortie (8), de sorte que l'air adsorbé et/ou purifié s'écoule dans une cabine via l'ouverture de sortie (12), et
dans la deuxième position de sortie, l'ouverture de sortie (12) est configurée pour être fermée par le clapet de sortie (8) et le conduit d'échappement (13) est configuré pour être ouvert, de sorte que l'échappement incluant le gaz et l'eau après la régénération s'écoule vers un environnement à travers le conduit d'échappement (13).

4. Système de commande d'air d'habitacle (100) selon la revendication 3, dans lequel l'ensemble de commande de clapet (5) inclut en outre un accouplement du clapet de sortie (7) couplé à un mécanisme d'entraînement,

5. Système de commande d'air d'habitacle (100) selon la revendication 4, dans lequel le clapet de sortie (8) inclut un tampon de blocage (106) à une extrémité éloignée du mécanisme d'entraînement,
dans la première position de sortie, le tampon de blocage (106) est configuré pour bloquer le conduit d'échappement (13), et
dans la deuxième position de sortie, le tampon de blocage (106) est configuré pour ne pas bloquer le conduit d'échappement (13).

6. Système de commande d'air d'habitacle (100) selon l'une quelconque des revendications 1 à 5, dans lequel l'unité d'adsorption (3) inclut un matériau d'adsorption de vapeur d'eau.

7. Système de commande d'air d'habitacle (100) selon l'une quelconque des revendications 1 à 5, dans lequel l'unité d'adsorption (3) inclut un matériau d'adsorption de dioxyde de carbone.

8. Système de commande d'air d'habitacle (100) selon l'une quelconque des revendications 1 à 5, dans lequel l'unité d'adsorption (3) inclut un matériau d'adsorption de gaz toxiques.

9. Système de commande d'air d'habitacle (100) selon l'une quelconque des revendications 1 à 5, dans lequel le dispositif de chauffage (4) inclut une bride de fixation (27) configurée pour s'engager avec une structure de fixation (10) du boîtier supérieur (1) et assurer l'étanchéité contre celle-ci lorsque le dispositif de chauffage (4) est mis en place dans le boîtier supérieur (1).

10. Système de commande d'air d'habitacle (100) selon l'une quelconque des revendications 1 à 5, dans lequel l'unité d'adsorption (3) est en forme de U ou en demi-cercle dans la section transversale perpendiculaire à l'axe longitudinal (301) de l'unité d'adsorption.
